(19) Europäisches Patentamt / European Patent Office / Office européen des brevets

(11) **EP 2 058 206 A1**

(12) **DEMANDE DE BREVET EUROPEEN**

(43) Date de publication:
**13.05.2009 Bulletin 2009/20**

(51) Int Cl.:
**B61C 9/50** *(2006.01)*  **B60L 3/00** *(2006.01)*

(21) Numéro de dépôt: **08168282.5**

(22) Date de dépôt: **04.11.2008**

(84) Etats contractants désignés:
**AT BE BG CH CY CZ DE DK EE ES FI FR GB GR HR HU IE IS IT LI LT LU LV MC MT NL NO PL PT RO SE SI SK TR**
Etats d'extension désignés:
**AL BA MK RS**

(30) Priorité: **09.11.2007 FR 0758922**

(71) Demandeur: **ALSTOM Transport SA**
**92300 Levallois-Perret (FR)**

(72) Inventeur: **Lessard, Fabrice**
**59400 Cambrai (FR)**

(74) Mandataire: **Blot, Philippe Robert Emile**
**Cabinet Lavoix**
**2, place d'Estienne d'Orves**
**75441 Paris Cedex 09 (FR)**

(54) **Bogie de véhicule ferroviaire comprenant un dispositif de contrôle de l'entraînement des roues, et procédé de contrôle correspondant.**

(57) Ce bogie est du type comprenant un châssis de bogie (4), des roues (18) d'appui et de guidage du bogie le long d'une voie ferrée, un réducteur (24), et un dispositif de suspension (25), dans lequel les roues sont montées à rotation sur le châssis (4), le réducteur (24) comprend au moins un organe de transmission (34, 36) et un carter (30), le ou chaque organe de transmission (34, 36) étant monté rotatif dans le carter (30), couplé à au moins une roue, et destiné à être couplé à un moteur (20), le carter (30) étant monté sur le châssis par l'intermédiaire du dispositif de suspension (25) avec possibilité de déplacement du carter (30) par rapport au châssis (4).

Selon un aspect de l'invention, de bogie comprend un dispositif de contrôle (26) comportant un capteur (70) de déplacement du carter (30) par rapport au châssis (4).

FIG.2

EP 2 058 206 A1

**Description**

La présente invention concerne un bogie de véhicule ferroviaire, du type comprenant un châssis de bogie, des roues d'appui et de guidage du bogie le long d'une voie ferrée, un réducteur, et un dispositif de suspension, dans lequel les roues sont montées à rotation sur le châssis, le réducteur comprend au moins un organe de transmission et un carter, le ou chaque organe de transmission étant monté rotatif dans le carter, couplé à au moins une roue, et destiné à être couplé à un moteur, le carter étant monté sur le châssis par l'intermédiaire du dispositif de suspension avec possibilité de déplacement du carter par rapport au châssis.

Il est souhaitable dans les véhicules ferroviaires de surveiller le couple d'entraînement transmis depuis un moteur à chaque roue motrice couplée à ce moteur, par exemple pour la maintenance ou pour surveiller l'apparition de pics de couple.

Pour ce faire, il est possible de placer un capteur de couple sur un des organes de transmission d'un dispositif de transmission liant en rotation l'arbre de sortie d'un moteur d'entraînement à une roue motrice.

Néanmoins, les capteurs de couple sont difficiles à mettre en oeuvre et encombrants.

Un but de l'invention est de proposer un bogie de véhicule ferroviaire équipé d'un dispositif de contrôle qui soit facile à mettre en oeuvre et compact.

A cet effet, l'invention propose un bogie du type précité, comprenant un dispositif de contrôle comportant un capteur de déplacement du carter par rapport au châssis.

Selon d'autres modes de réalisation, le bogie comprend une ou plusieurs des caractéristiques suivantes, prise(s) isolément ou selon toutes les combinaisons techniquement possibles :

- le dispositif de contrôle comprend une unité de contrôle apte à déterminer le couple fourni en entrée du réducteur en fonction d'un signal de mesure du capteur de déplacement ;
- le capteur de déplacement est un capteur de distance ;
- le capteur de distance est un capteur à effet Hall ;
- le capteur de distance est disposé de façon à mesurer une distance entre le châssis et un élément rigide du dispositif de suspension relié au châssis par un élément élastique du dispositif de suspension ;
- l'élément rigide est une bielle de suspension reliée à une extrémité au châssis par l'intermédiaire d'un premier élément élastique, et reliée à son extrémité opposée au carter du réducteur par l'intermédiaire d'un deuxième élément élastique.

L'invention concerne également un procédé de contrôle de l'entraînement d'une roue motrice d'un bogie de véhicule ferroviaire, dans lequel on entraîne la roue par l'intermédiaire d'un réducteur comprenant au moins un organe de transmission et un carter, l'organe de transmission étant monté rotatif sur le carter et lié en rotation à la roue, le réducteur étant destiné à être accouplé à un moteur d'entraînement de la roue, le carter étant lié à un châssis du bogie par l'intermédiaire d'un dispositif de suspension autorisant des déplacements du carter par rapport au châssis et dans lequel on mesure les déplacements du carter par rapport au châssis pour contrôler l'entraînement en rotation de la roue

Dans un mode de mise en oeuvre, on mesure une distance entre le châssis et un élément rigide du dispositif de suspension relié au châssis par un élément élastique du dispositif de suspension

Dans un mode de mise en oeuvre, on détermine le couple fourni au réducteur en fonction du déplacement mesuré entre le carter et le châssis.

L'invention et ses avantages seront mieux compris à la lecture de la description qui va suivre, donnée uniquement à titre d'exemple, et faite en se référant aux dessins annexés, sur lesquels :

- la figure 1 est une vue schématique de dessus d'un boggie de véhicule ferroviaire conforme à l'invention ;
- la figure 2 est une vue partielle en coupe selon II-II de la vue de la figure 1 ;
- la figure 3 est une vue en coupe selon III-III de la vue de la figure 2 ; et
- la figure 4 est une vue agrandie de la zone IV de la vue de la figure 2.

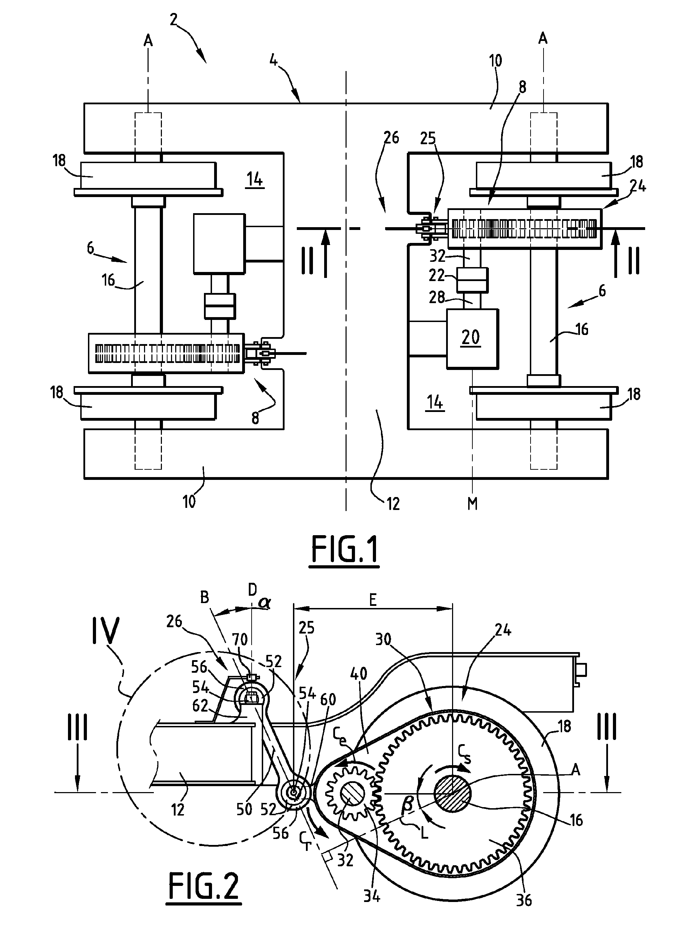

Tel que représenté sur la figure 1, le bogie 2 comprend un châssis 4, deux essieux 6 montés à rotation sur le châssis 4, et deux ensembles de motorisation 8, chacun associé à un essieu 6 respectif.

Le châssis 4 possède en vue de dessus une forme en H. Il comprend deux longerons 10 parallèles et une traverse 12 reliant les longerons 10 sensiblement par leurs milieux.

Les longerons 10 et la traverse 12 définissent, de chaque côté de la traverse 12, un espace 14 de réception d'un essieu 6 et de l'ensemble de motorisation 8 associé.

Chaque essieu 6 comprend un arbre d'essieu 16 et une paire de roues 18 d'appui et de guidage portées par l'arbre 16.

L'arbre d'essieu 16 de chaque essieu 6 s'étend transversalement entre les longerons 10, et est monté à rotation autour de son axe A sur les longerons 10.

Les roues 18 de chaque essieu sont coaxiales d'axe A. Elles sont destinées à prendre appui sur les rails d'une voie ferrée pour supporter le bogie 2 et le guider le long de cette voie ferrée.

Chaque ensemble de motorisation 8 est destiné à entraîner en rotation l'arbre 16 de l'essieu 6 associé, en vue de l'entraînement en rotation des roues 18 de cet essieu 6. Ainsi, chaque essieu 6 est « moteur », et chaque roues 18 est « motrice ».

Les deux ensembles de motorisation 8 sont analogues. Seul l'ensemble de motorisation 8 situé à droite sur la figure 1 sera décrit en détail par la suite.

Cet ensemble de motorisation 8 comprend un moteur 20, un accouplement 22, un réducteur 24, un dispositif de suspension 25 et un dispositif de contrôle 26.

Le moteur 20 est fixé rigidement sur la traverse 12. Il comprend un arbre de sortie 28 rotatif s'étendant suivant un axe de moteur M. Le moteur 20 est disposé en position transversale : l'axe de moteur M est parallèle à l'axe A de l'arbre 16 de l'essieu 6 associé.

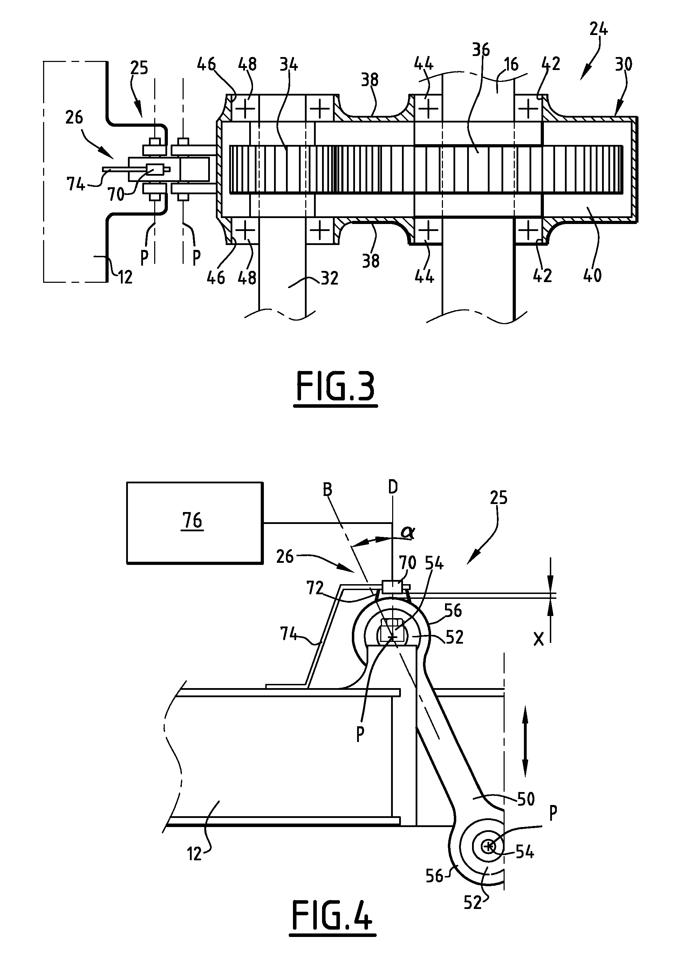

Comme on peut mieux le voir sur les figures 2 et 3, le réducteur 24 comprend un carter 30, un arbre d'entrée 32, un engrenage d'entrée 34, et un engrenage de sortie 36.

Le carter 30 possède deux parois 38 (Figure 3) parallèles délimitant entre elles un logement 40.

Les parois 38 possèdent des premières ouvertures 42 alignées. L'arbre d'essieu 16 traverse le carter 30 en passant au travers des premières ouvertures 42. Le carter 30 est monté rotatif autour de l'arbre d'essieu 16 par l'intermédiaire de premiers paliers à roulement 44 disposés dans les ouvertures 42.

L'engrenage de sortie 36 est reçu dans le logement 40, entre les parois 38, et emmanché sur l'arbre d'essieu 16. L'engrenage de sortie 36 est lié en rotation à l'arbre d'essieu 16.

Les parois 38 possèdent des deuxièmes ouvertures 46 alignées. L'arbre d'entrée 32 s'étend entre les parois 38, parallèlement à l'arbre d'essieu 16, et sort du carter 30 par une des deuxièmes ouvertures 46. L'arbre d'entrée 32 est monté rotatif sur le carter 30 par l'intermédiaire de deuxièmes paliers à roulement 48 disposés dans les ouvertures 46.

L'engrenage d'entrée 34 est reçu dans le logement 40, entre les parois 38, et emmanché sur l'arbre d'entrée 32. L'engrenage d'entrée 34 est lié en rotation à l'arbre d'entrée 32.

L'arbre d'entrée 32 est lié en rotation à l'arbre de sortie 28 par l'accouplement 22 (figure 1).

L'accouplement 22 est un accouplement de type connu tel qu'un joint homocinétique apte à transmettre un couple entre l'arbre de sortie 28 et l'arbre d'entrée 32 en autorisant un désaxage entre ces deux arbres.

Le réducteur 24 est en partie supporté par l'arbre d'essieu 16 sur lequel le carter 30 est monté à rotation et en partie par le châssis de bogie 4 auquel il est suspendu par l'intermédiaire d'un dispositif de suspension 25 disposé entre le carter 30 et la traverse 12 pour s'opposer à une rotation du carter 30 autour de l'arbre d'essieu 16, tout en permettant des oscillations du carter 30, afin d'assurer une certaine souplesse de l'ensemble. Le réducteur 24 est qualifié de « semi-suspendu ».

Tel que représenté sur la figure 2, le dispositif de suspension 25 comprend une bielle de suspension 50 métallique, deux articulations élastiques 52, et deux pivots 54.

La bielle 50 comprend deux têtes de bielle 56 annulaires situées aux extrémités de la bielle 50. La bielle 50 possède un axe de bielle B passant par le centre des têtes de bielles 56.

Chaque pivot 54 traverse une tête de bielle 56 en étant relié à la tête de bielle 56 par une articulation 52 respective.

Chaque articulation 52 présente la forme d'un manchon annulaire réalisé en matériau élastique, par exemple en matériau élastomère. Chaque articulation 52 est insérée à l'intérieur de la tête de bielle 56 associée avec son axe aligné avec celui P de la tête de bielle 56, et le pivot 54 correspondant est emmanché à l'intérieur de l'articulation 52.

Chaque articulation 52 autorise un déplacement du pivot 54 à l'intérieur de la tête de bielle 56 correspondante radialement par rapport à l'axe P de la tête de bielle 56, avec une déformation élastique de l'articulation 52.

Un des pivots 54 est fixé par ses extrémités sur une chape 60, elle-même fixée sur le carter 30. L'autre pivot 54 est fixé par ses extrémités sur une chape 62, elle-même fixée sur la traverse 12.

Tel que représenté sur la figure 4, le dispositif de contrôle 26 comprend un capteur 70 à effet Hall fixé au moyen d'un support 74 sur la traverse 12 et positionné au-dessus de la tête de bielle 56 lié à la traverse 12 par l'articulation 52 et son pivot 54. Le capteur 70 est monté orienté suivant une direction de mesure D.

L'axe de bielle B est incliné d'un angle $\alpha$ par rapport à la direction de mesure D.

Le capteur 70 est apte à émettre un signal de mesure de la distance entre le capteur 70 et la tête de bielle 56 fixée sur la traverse 12.

Le dispositif de contrôle 26 comprend une jupe de protection 72 élastique entourant le capteur 70 est délimitant un espace sensiblement étanche entre le capteur 70 et la tête de bielle 56 coté traverse 12.

Le dispositif de contrôle 26 comprend une unité 76 de traitement du signal de mesure émis par le capteur 70.

Le fonctionnement du bogie 2 va maintenant être décrit en se référant aux figures 1 à 4.

En fonctionnement, le moteur 20 produit un couple Ce (exprimé en m.N) d'entraînement en rotation de l'arbre de sortie 28. Le couple d'entraînement Ce est transmis par l'accouplement 22 à l'arbre d'entrée 32 du réducteur 24, puis converti par le réducteur 24 en un couple aux roues Cs appliqué sur l'arbre d'essieu 16.

Par effet de réaction entre les engrenages d'entrée 34 et de sortie 36, l'engrenage d'entrée 34 tend à se déplacer autour de l'engrenage de sortie 36. Il en résulte l'apparition d'un couple de réaction Cr s'appliquant sur le carter 30, et tendant à faire tourner le carter 30 autour de l'arbre d'essieu 16. les couples Ce, Cr et Cs sont illustrés sur la Figure 2.

La bielle 50 s'oppose à la rotation du carter 30. Elle oppose au couple de réaction Cr à une force F transmise par la bielle B suivant son axe de bielle B.

Du fait de la présence des articulations 52, l'apparition d'une force F dans la bielle 50 se traduit par un déplacement de la bielle 50 par rapport au châssis 4.

Le déplacement de la bielle 50 mesuré selon la direction de mesure D est liée au couple d'entraînement Ce, comme cela est expliqué ci-dessous.

Le couple de réaction Cr est égal à la différence entre le couple d'entraînement Ce en entrée de réducteur 24 et le couple de sortie Cs en sortie du réducteur 24, i.e. le couple appliqué sur l'arbre d'essieu 16. En outre, le couple de sortie Cs est égal au couple d'entraînement Ce multiplié par le rapport de réduction R du réducteur 24. On obtient l'équation (1) suivante :

$$(1) \qquad Cr = Ce(R\text{-}1)$$

Le couple de bielle Cb exercé par la bielle 50 sur le carter 30 est égal à la force F multipliée par le bras de levier L, qui est la distance de l'axe de bielle B à l'axe A de l'arbre d'essieu 16. La force F est égale au déplacement Y (exprimé en m.) de la bielle 50 par rapport au châssis 4 suivant l'axe de bielle B, multiplié par la raideur radiale K (exprimée en N/m) des articulations 52. Le déplacement Y de la bielle 50 suivant l'axe de bielle B est égal au déplacement X de la bielle 50 suivant la direction de mesure D multiplié par le cosinus de l'angle $\alpha$ entre l'axe de bielle B et la direction de mesure D. On obtient l'équation (2) suivante :

$$(2) \qquad Cb = K.X.\cos(\alpha).L$$

Dans un état d'équilibre, le couple de réaction Cr est égal au couple Cb opposé exercé par la bielle 50. Ainsi, en combinant les équations (1) et (2), on obtient l'équation (3) suivante entre le couple développé par le moteur et le déplacement mesuré par le capteur :

$$(3) \qquad Ce = X.K.L.\cos(\alpha)/(R\text{-}1)$$

Si l'on préfère, la relation (3) peut être exprimée en fonction de l'entraxe E entre l'axe A et l'axe P de la tête de bielle 56 fixée sur le carter 30 : le bras de levier L est sensiblement égal à l'entraxe E multiplié par le cosinus de l'angle $\beta$ entre l'entraxe E et le bras de levier L.

Dans l'exemple présent, la direction de mesure D est sensiblement verticale, et l'axe A et l'axe de la tête de bielle 56 fixée sur le carter 30 se situent dans un même plan sensiblement horizontal, de sorte que l'angle $\beta$ et l'angle $\alpha$ sont également égaux. Compte tenu de ceci, la relation (3) peut s'exprimer dans l'exemple illustré de la façon suivante :

$$(4) \qquad Ce = X.K.E.\cos^2(\alpha)/(R\text{-}1)$$

En toute rigueur, l'angle $\alpha$, l'angle $\beta$, l'entraxe E et le bras de levier L varient lorsque le carter 30 se déplace par rapport au châssis 4. Néanmoins, ces variations sont très faibles, de sorte que ces grandeurs peuvent être considérées comme constantes.

On note que les relations (3) ou (4) sont simples puisque le couple Ce est proportionnel au déplacement X.

L'unité de traitement 76 est programmée pour fournir une valeur de couple d'entraînement Ce en fonction de la mesure de déplacement X.

La détermination du couple d'entraînement Ce et le contrôle de son évolution au cours du temps permet de détecter d'éventuelles anomalies.

Ainsi, on peut surveiller que le couple d'entraînement Ce ne dépasse pas certaines valeurs de seuils (négatives en phase de freinage ou positives en phase d'accélération). Ceci sert à la maintenance du bogie 2.

Le dispositif de contrôle 26 selon l'invention est simple puisqu'il comprend uniquement un capteur de déplacement. Il est en outre robuste, compact et de réalisation facile. Il peut être ajouté facilement sur des bogies déjà en service.

En outre, ce dispositif de contrôle 26 peut être fixé dès l'origine sur tous les bogies, pour faciliter leur maintenance, ou pour procéder à des campagnes de mesure.

Un avantage de la détection du couple d'entraînement Ce par la mesure de déplacement X est que la mesure de déplacement X peut être utilisée pour surveiller les articulations 52. Ainsi, un déviation de la mesure X permet de détecter un fluage de l'articulation au cours du temps. La bielle 50 peut alors être remplacée avant une détérioration trop importante de l'articulation 52.

On notera que la relation (1) resterait valable pour un réducteur possédant plus de deux engrenages en cascade.

L'invention s'applique au bogie de véhicule ferroviaire tel que des trains de grandes lignes ou des tramways destinés à circuler en ville.

## Revendications

1. Bogie de véhicule ferroviaire, du type comprenant un châssis de bogie (4), des roues (18) d'appui et de guidage du bogie le long d'une voie ferrée, un réducteur (24), et un dispositif de suspension (25), dans lequel les roues sont montées à rotation sur le châssis (4), le réducteur (24) comprend au moins un organe de transmission (34, 36) et un carter (30), le ou chaque organe de transmission (34, 36) étant monté rotatif dans le carter (30), couplé à au moins une roue, et destiné à être couplé à un moteur (20), le carter (30) étant monté sur le châssis par l'intermédiaire du dispositif de suspension (25) avec possibilité de déplacement du carter (30) par rapport au châssis (4),

**caractérisé en ce qu'**il comprend un dispositif de contrôle (26) comportant un capteur (70) de déplacement du carter (30) par rapport au châssis (4).

2. Bogie selon la revendication 1, dans lequel le dispositif de contrôle (26) comprend une unité de contrôle (76) apte à déterminer le couple fourni en entrée du réducteur(24) en fonction d'un signal de mesure du capteur de déplacement (70).

3. Bogie selon la revendication 1 ou 2, dans lequel le capteur de déplacement (70) est un capteur de distance.

4. Bogie selon la revendication 3, dans lequel le capteur de distance (70) est un capteur à effet Hall.

5. Bogie selon la revendication 3 ou 4, dans lequel le capteur de distance (70) est disposé de façon à mesurer une distance entre le châssis (4) et un élément rigide (50) du dispositif de suspension (25) relié au châssis (4) par un élément élastique (52) du dispositif de suspension (25).

6. Bogie selon la revendication 5, dans lequel l'élément rigide (50) est une bielle de suspension (50) reliée à une extrémité au châssis (4) par l'intermédiaire d'un premier élément élastique (52), et reliée à son extrémité opposée au carter (30) du réducteur (24) par l'intermédiaire d'un deuxième élément élastique (52).

7. Procédé de contrôle de l'entraînement en rotation d'au moins une roue (18) d'un bogie de véhicule ferroviaire, dans lequel on entraîne la roue par l'intermédiaire d'un réducteur (24) comprenant au moins un organe de transmission (34, 36) et un carter (30), l'organe de transmission (34, 36) étant monté rotatif sur le carter (30) et lié en rotation à la roue (18), le réducteur étant destiné à être accouplé à un moteur d'entraînement de la roue (18), le carter (30) étant lié à un châssis (4) du bogie par l'intermédiaire d'un dispositif de suspension (25) autorisant des déplacements du carter (30) par rapport au châssis (4), dans lequel on mesure les déplacements du carter (30) par rapport au châssis (4) pour contrôler l'entraînement en rotation de la roue (18).

8. Procédé selon la revendication 7, dans lequel on mesure une distance entre le châssis (4) et un élément rigide (50) du dispositif de suspension (25) relié au châssis (4) par un élément élastique (52) du dispositif de suspension (25).

9. Procédé selon la revendication 7 ou 8, dans lequel on détermine le couple fourni au réducteur (24) en fonction du déplacement mesuré entre le carter (30) et le châssis (4).

## FIG.1

## FIG.2

## FIG.3

## FIG.4

EP 2 058 206 A1

Europäisches Patentamt
European Patent Office
Office européen des brevets

**RAPPORT DE RECHERCHE EUROPEENNE**

Numéro de la demande

EP 08 16 8282

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | DE 101 16 657 C1 (VOITH TURBO KG [DE]) 7 novembre 2002 (2002-11-07) * le document en entier * ----- | 1-9 | INV. B61C9/50 B60L3/00 |
| A | JP 61 285006 A (MITSUBISHI ELECTRIC CORP) 15 décembre 1986 (1986-12-15) * abrégé; figure 12 * ----- | 1 | |
| A | EP 1 034 997 A (ALSTOM [FR]) 13 septembre 2000 (2000-09-13) * alinéas [0009], [0014] - [0019] * ----- | 1 | |

| | | | DOMAINES TECHNIQUES RECHERCHES (IPC) |
|---|---|---|---|
| | | | B61C B60L |

Le présent rapport a été établi pour toutes les revendications

| Lieu de la recherche | Date d'achèvement de la recherche | Examinateur |
|---|---|---|
| Munich | 6 février 2009 | Fuchs, Aloïse |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

...............................................................................
& : membre de la même famille, document correspondant

EPO FORM 1503 03.82 (P04C02)

8

**ANNEXE AU RAPPORT DE RECHERCHE EUROPEENNE
RELATIF A LA DEMANDE DE BREVET EUROPEEN NO.**

EP 08 16 8282

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

06-02-2009

| Document brevet cité au rapport de recherche | | | Date de publication | Membre(s) de la famille de brevet(s) | | | Date de publication |
|---|---|---|---|---|---|---|---|
| DE 10116657 | | C1 | 07-11-2002 | AUCUN | | | |
| JP 61285006 | | A | 15-12-1986 | AU | 592089 | B2 | 04-01-1990 |
| | | | | AU | 5850786 | A | 18-12-1986 |
| | | | | ES | 8703359 | A1 | 01-05-1987 |
| | | | | MX | 168430 | B | 25-05-1993 |
| EP 1034997 | | A | 13-09-2000 | AT | 314236 | T | 15-01-2006 |
| | | | | CA | 2300597 | A1 | 11-09-2000 |
| | | | | DE | 60025055 | T2 | 03-08-2006 |
| | | | | DK | 1034997 | T3 | 22-05-2006 |
| | | | | ES | 2255479 | T3 | 01-07-2006 |
| | | | | FR | 2790725 | A1 | 15-09-2000 |
| | | | | JP | 2000312401 | A | 07-11-2000 |
| | | | | KR | 20010020657 | A | 15-03-2001 |
| | | | | PL | 338940 | A1 | 25-09-2000 |
| | | | | SK | 3572000 | A3 | 07-11-2000 |
| | | | | US | 6411051 | B1 | 25-06-2002 |
| | | | | ZA | 200001160 | A | 15-12-2000 |

EPO FORM P0460

Pour tout renseignement concernant cette annexe : voir Journal Officiel de l'Office européen des brevets, No.12/82